# EUROPEAN PATENT SPECIFICATION

(11) **EP 3 636 413 B1**
(45) Date of publication and mention of the grant of the patent: **26.10.2022**
(21) Application number: 18812945.6
(22) Date of filing: 05.06.2018
(51) Int. Cl.: B29C 49/48, B29C 49/30, B29C 49/36, B29L 31/00, B29C 49/06

(54) **MOLD**
FORM
MOULE

(30) Priority: 09.06.2017 JP 2017114306
(43) Date of publication of application: 15.04.2020
(73) Proprietor: NISSEI ASB MACHINE CO., LTD., Komoro-shi Nagano 384-8585 (JP)
(72) Inventor: MARUMO, Kenji, Komoro-shi Nagano 384-8585 (JP)
(74) Representative: Mewburn Ellis LLP
(86) International application number: PCT/JP2018/021563
(87) International publication number: WO 2018/225734

(56) References cited:
- WO-A1-2016/181850
- WO-A1-2017/073699
- WO-A1-2017/073699
- WO-A1-2018/070499
- JP-A- H10 272 679
- JP-A- H11 314 268
- JP-A- 2000 246 790
- KR-U- 20130 002 665
- US-A1- 2004 065 636

## Description

### TECHNICAL FIELD

The present invention relates to a mold for a resin container.

### BACKGROUND ART

A container formed of resin may be used for accommodating and transporting seasonings, beverages, liquors, and the like. A container having a large capacity has a large body diameter and is difficult to grasp with one hand. For this reason, a grip portion may be formed in a body portion of the container during blow molding.

A mold for molding a container (a deep grippable container) having a deep grip recess is equipped with an insert mold for forming a recess. PTL 1 discloses a mold in which an insert mold is directly coupled to a linear actuator and can advance and retreat in parallel to a grip recess of a container. PTL 2 discloses a mold in which an insert mold can advance and retreat substantially in parallel to a grip recess of a container via a link member by a piston member provided in the advancing and retreating direction of the insert mold such that the insert mold is wrapped around the grip recess of the container.

KR20130002665U discloses a handle forming apparatus for a PET container. container according to the preamble of claim 1.

### CITATION LIST

### PATENT LITERATURE

PTL 1: Specification of U.S. Patent No. 8827689
PTL 2: WO 2017/073699

### SUMMARY OF INVENTION

### TECHNICAL PROBLEM

In a case where an insert mold is directly coupled to a linear actuator or a case where a link mechanism is interposed between the linear actuator and the insert mold and the linear actuator is provided in the advancing and retreating direction of the insert mold, the insert mold can advance and retreat in parallel to a grip recess of a container, which can be advantageous in an aspect of shaping the grip recess and separating the container from the mold. However, the blow molding space is small since the linear actuator is provided in a blow mold or a blow base, and thus, container sizes and the number of containers that can be molded are reduced.

In a case where a plurality of link mechanisms are interposed and the linear actuator is provided in a direction perpendicular to the advancing and retreating direction of the insert mold, the number of components increases and there may be problems in terms of costs and difficulties in assembly and adjustment work and processing accuracy.

Therefore, an object of the present invention is to provide a mold that has a small number of components, that is a small size, and that is capable of molding containers of various sizes.

### SOLUTION TO PROBLEM

According to the present invention there is provided a mold as specified in claim 1.

According to the above configuration, the grip forming portion that is an insert mold can be advanced and retreated in a depth direction of the grip portion of the container by single rotary member that is rotated by the linear actuator, and it is possible to provide a small-sized mold capable of molding containers of various sizes with a small number of components.

In the mold of the present invention, the first engagement portion is an elongated cam hole, and the second engagement portion is a loose fit member engaged with the cam hole.

According to the above configuration, the loose fit member comes rolling contact with the cam hole to press and rotate the rotary member accompanying the operation of the linear actuator, so that the grip forming portion can be moved from the standby position to the pressing position. Further, with the elongated cam hole formed, the linearly moving loose fit member can come rolling contact with the cam hole and the rotary member can be appropriately moved even if the direction of the cam hole changes due to the movement of the rotary member.

In the mold of the present invention, in the pressing position, a contact point between the cam hole and the loose fit member may be located on a straight line that passes through a center of the loose fit member and extends in the direction the pressing portion is moved forward toward the cavity so as to move the grip forming portion from the standby position to the pressing position.

According to this configuration, by aggregating forces from the linear actuator in the pressing position at substantially one point without dispersing, the forces can be efficiently transmitted in the forward direction of the pressing portion and the grip forming portion can be held in the pressing position appropriately relative to the blow pressure.

In the mold of the present invention, the linear actuator may be provided in a direction perpendicular to a protruding direction of the grip forming portion in the pressing position.

According to this configuration, the linear actuator is not provided in the protruding direction of the grip forming portion, so that the cavity can be enlarged in the protruding direction of the grip forming portion. Therefore, it is possible to mold a large container even with a small mold.

### ADVANTAGEOUS EFFECTS OF INVENTION

According to the present invention, it is possible to provide a mold that has a small number of components, that is a small size, and that is capable of molding containers of various sizes.

### BRIEF DESCRIPTION OF DRAWINGS

[Fig. 1] Part (a) is a side view of a resin container formed by blow molding according to an embodiment, part (b) is a front view of the resin container, part (c) is a rear view of the resin container, and part (d) is a cross-sectional view taken along a line A-A in part (a).
[Fig. 2] Fig. 2 is a block diagram of a blow molding apparatus according to the embodiment.
[Fig. 3] Fig. 3 is a cross-sectional view of a blow molding mold in the blow molding apparatus according to the embodiment, which shows a state in which a rotary member is in a standby position.
[Fig. 4] Fig. 4 is a cross-sectional view of the blow molding mold in the blow molding apparatus according to the embodiment, which shows a state in which the rotary member is in a pressing position.
[Fig. 5] Part (a) is a plan view of a rotary member of a blow molding unit according to the embodiment, and part (b) is a front view of the rotary member.
[Fig. 6] Part (a) is a front view of a pressing portion of a linear actuator according to the embodiment, and part (b) is a plan view of the pressing portion.

### DESCRIPTION OF EMBODIMENTS

Hereinafter, an embodiment of the present invention will be described with reference to the drawings.

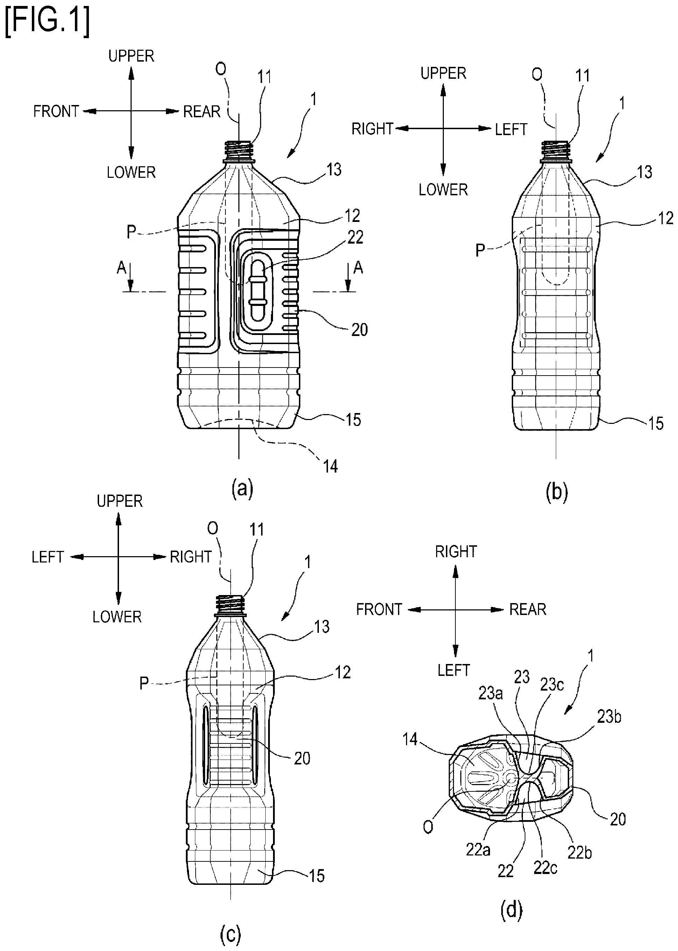

Parts (a) to (d) of Fig. 1 show a resin container 1 manufactured by a blow molding apparatus including a mold according to the present embodiment. The resin container 1 is formed of a resin material such as polyethylene terephthalate and is used as a container for accommodating or transporting seasonings, beverages, liquors, and the like. The resin container 1 includes a neck portion 11 having an opening on its upper end side, a cylindrical body portion 12, a shoulder portion 13 connecting the neck portion 11 and the body portion 12 at an increasing diameter, a bottom portion 14 on a lower end side of the resin container 1, and a heel portion 15 connecting the bottom portion 14 and the body portion 12 at an increasing diameter. The body portion 12 of the resin container 1 is provided with a grip portion 20. Dotted lines in parts (a) to (c) of Fig. 1 indicate a preform P used in the manufacture of the resin container 1. The preform P includes a neck portion, a substantially cylindrical body portion, and a substantially hemispherical bottom portion, which have the same shapes as those of the resin container 1, and has a bottomed cylindrical shape.

The grip portion 20 is formed on a back surface side of the resin container 1 from the shoulder portion 13 toward the lower side of the body portion 12 in the height direction of the resin container 1. The grip portion 20 is continuous with an outer peripheral surface of the resin container 1. The grip portion 20 has an outer peripheral surface having substantially the same outer diameter as the outer peripheral surface of the body portion 12 formed on upper and lower sides of the grip portion 20 on the back surface side of the body portion 12. The grip portion 20 has an outer peripheral surface recessed toward the inside of the resin container 1 from the outer peripheral surface of the body portion 12 on right and left side surfaces of the body portion 12.

The grip portion 20 is provided with, on its front side (the center axis O side of the resin container 1), a first recess 22 on its left surface and a second recess 23 on its right surface that are recessed toward the inside of the resin container 1 and face each other. The first recess 22 and the second recess 23, which are provided as grip recesses when gripping the grip portion 20, are formed at substantially the same height as the grip portion 20.

The first recess 22 has a front surface portion 22a and a rear surface portion 22b that are inclined from one side surface of the resin container 1 toward the inside of the resin container 1, and a bottom portion 22c formed between the front surface portion 22a and the rear surface portion 22b. The second recess 23 has a front surface portion 23a and a rear surface portion 23b that are inclined from a side surface opposite to the one side surface of the resin container 1 toward the inside of the resin container 1, and a bottom portion 23c formed between the front surface portion 23a and the rear surface portion 23b. The first recess 22 and the second recess 23 are formed such that the bottom portion 22c and the bottom portion 23c face each other. The rear surface portion 22b of the first recess 22 and the rear surface portion 23b of the second recess 23 define an outer peripheral surface on the front side of the grip portion 20. In part (d) of Fig. 1, the bottom portion 22c and the bottom portion 23c are welded at surfaces thereof facing each other (a dotted line portion), and the bottom portion 22c and the bottom portion 23c may also be separated from each other on surfaces thereof facing each other.

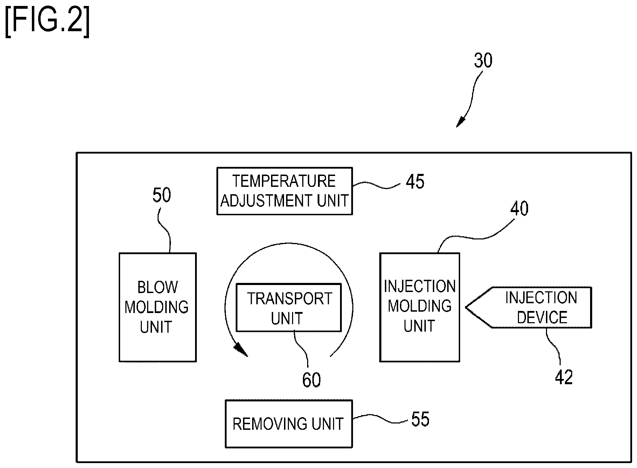

Next, a blow molding apparatus for manufacturing the resin container 1 will be described with reference to Fig. 2.

As shown in Fig. 2, a blow molding apparatus 30 includes an injection molding unit 40 configured to manufacture a preform and a temperature adjustment unit 45 configured to adjust the temperature of the manufactured preform. The injection molding unit 40 is connected to an injection device 42 that supplies a resin material as a raw material. The blow molding apparatus 30 further includes a blow molding unit (an example of a blow device) 50 configured to blow a preform and manufacture the resin container 1 having the grip portion 20, and a removing unit 55 configured to remove the manufactured resin container 1.

The injection molding unit 40, the temperature adjustment unit 45, the blow molding unit 50, and the removing unit 55 are provided at positions rotated by a predetermined angle (90 degrees in this example) around a transport unit 60. The transport unit 60 is constituted by a rotary plate or the like, through which a molded article in a state in which the neck portion 11 is supported by a neck mold attached to the rotary plate is transported to each unit accompanying rotation of the rotary plate.

The injection molding unit 40 includes an injection cavity mold, an injection core mold, a neck mold, and the like, which are not shown. A bottomed cylindrical preform is manufactured by pouring a resin material from the injection device 42 into a preform-shaped space formed by clamping these molds.

The temperature adjustment unit 45 adjusts the temperature of the preform P produced by the injection molding unit 40 to a suitable temperature for stretching blow. The temperature adjustment unit 45 may be any of a temperature adjustment pot type, an infrared heater type, a RED type, and an electromagnetic wave heating type.

The removing unit 55 removes the resin container 1 by releasing the neck portion 11 of the resin container 1 manufactured by the blow molding unit 50 from the neck mold.

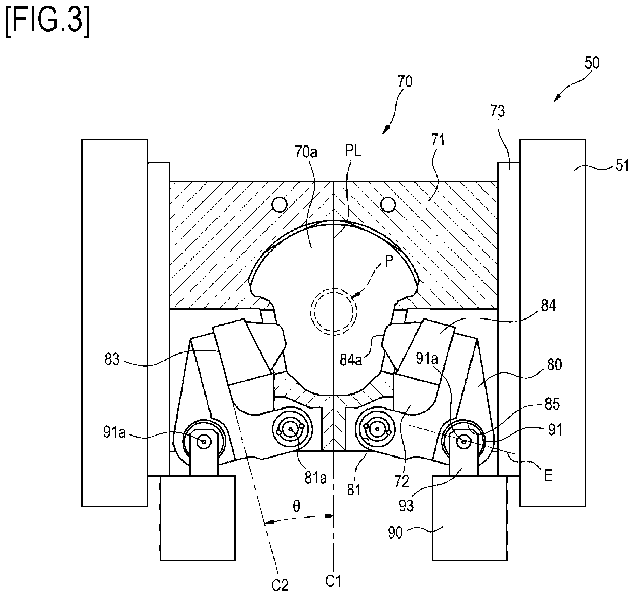

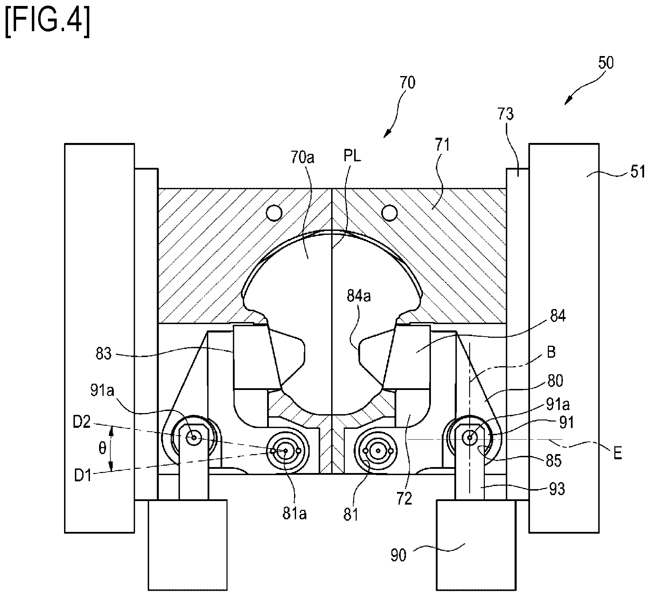

Next, a mold for manufacturing the resin container 1 provided in the blow molding unit 50 will be described with reference to Figs. 3 and 4. Figs. 3 and 4 are schematic cross-sectional views of a blow mold (schematic views when the blow mold is viewed from above) at a position in the blow molding unit 50 where a rotary member 80 and a linear actuator 90 to be described below are provided.

As shown in Figs. 3 and 4, the blow molding unit 50 includes a blow cavity mold (an example of the mold) 70 formed of two split molds 71, the rotary member 80 configured to form the grip portion 20, and the linear actuator 90 configured to rotate the rotary member 80. The split molds 71 are fixed to a blow base 73 and the blow base 73 is coupled to a mold clamping device (a mold clamping plate) 51 in an openable and closable manner. Although not shown, the blow cavity mold 70 is provided with a bottom mold at its lower portion and a blow core mold at its upper portion that are separately movable up and down. The dotted line at substantially a center position of the blow cavity mold 70 in Fig. 3 indicates the preform P before blow molding.

The blow cavity mold 70 accommodates the injection molded preform P and defines an outer peripheral surface of the preform P (the resin container 1) to be blow molded.

The rotary member 80 is rotatable about a bearing portion (a rotation fulcrum portion) 81 in each of the split molds 71 of the blow cavity mold 70. Specifically, a substantially rectangular hollow portion (recess) 72 is formed on a side surface (a surface on which the linear actuator 90 is provided) of the split mold 71 that is orthogonal to a parting line (PL) so that the rotary member 80 is accommodated in the hollow portion 72. The bearing portion 81 on which the rotary member 80 is pivotally supported is provided at a part of the split mold 71 adjacent to the hollow portion 72 and close to the parting line. A shaft provided in the split mold 71 passes through the bearing portion 81. When the preform P is blow molded, the rotary member 80 may rotate from a standby position in a state of being away from the center of a cavity (space) 70a of the blow cavity mold 70 as shown in Fig. 3 to a pressing position in a state of being close to the center of the cavity 70a as shown in Fig. 4.

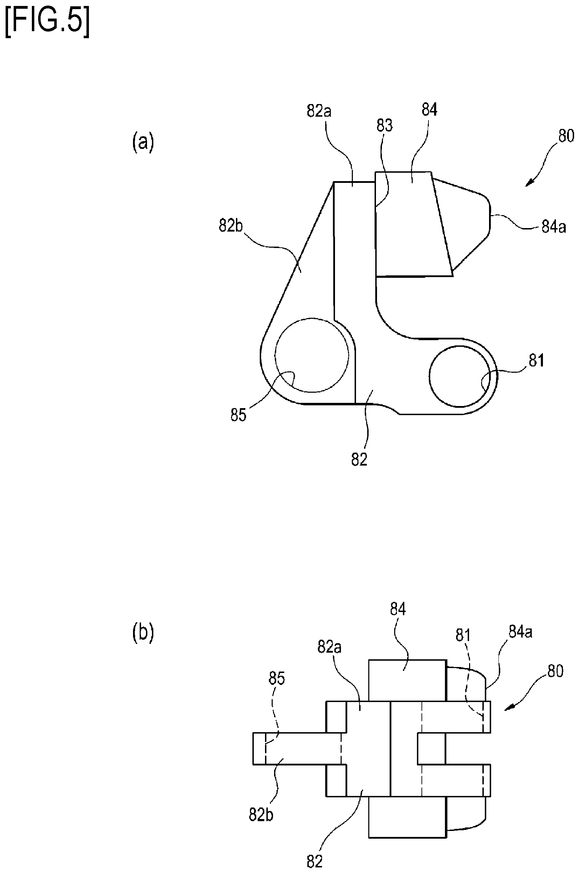

As shown in Fig. 5, the rotary member 80 includes a substantially L-shaped main body portion 82, an insert mold 84 that defines the shape of the grip portion 20 and is fixed to one end portion 83 of the main body portion 82, and an elongated cam hole 85 formed in a corner part of the substantially L-shape of the main body portion 82. An end portion of the rotary member 80 that is opposite to the end portion 83 to which the insert mold 84 is fixed serves as the bearing portion 81. The rotary member 80 forms the grip portion 20 in a portion of the resin container 1 by pressing a portion of the preform P that inflates during blow molding with the protruding insert mold 84. A ratio of the major axis to the minor axis of the cam hole 85 is preferably set in a range of 1.03 to 1.5, and more preferably in a range of 1.05 to 1.2. Specifically, the main body portion 82 includes an L-shaped base portion 82a, which is provided with the bearing portion 81 and is coupled to the insert mold 84, and a substantially acute triangular flat plate portion 82b which is provided with the cam hole 85. The length of the base portion 82a in a vertical direction (the upper-lower direction) in part (b) of Fig. 5 is larger than the length of the flat plate portion 82b so that rigidity of the base portion 82a is increased. The flat plate portion 82b is thinner than the base portion 82a in relation to arranging a pressing portion 93 in the upper-lower direction in part (b) of Fig. 5. The center of the cam hole 85 in the pressing position is located at an inner side of the split mold 71 (a position away from the linear actuator 90 in a direction in which the parting line in Fig. 4 extends) from the center of the bearing portion 81.

The insert mold 84 has a pressing surface 84a configured to press the preform P. When the rotary member 80 is in the standby position, the pressing surface 84a of the insert mold 84 is substantially flush with an inner wall surface of the cavity 70a (see Fig. 3) When the rotary member 80 is in the pressing position, the pressing surface 84a of the insert mold 84 enters the cavity 70a (see Fig. 4).

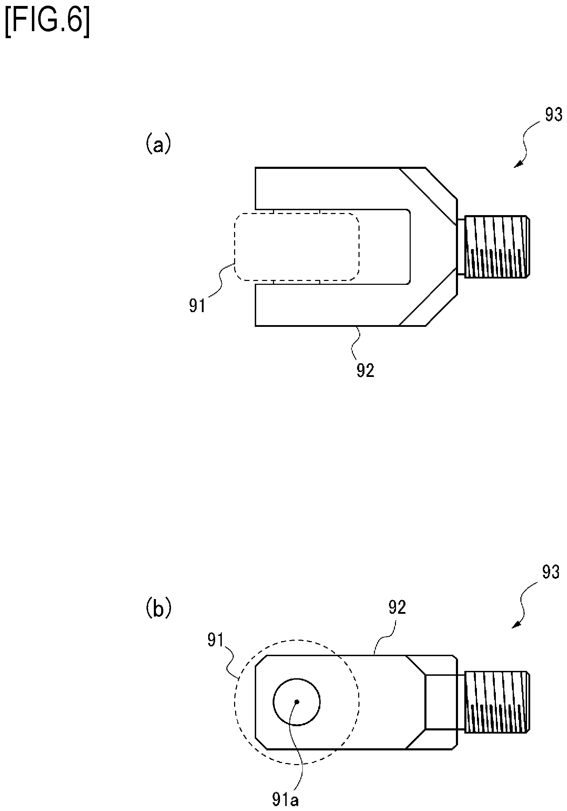

As shown in Figs. 3, 4, and 6, the linear actuator 90 includes the pressing portion 93 including a roller (an example of a loose fit member) 91 and a roller clamping portion (an example of a loose fit member clamping portion) 92. The linear actuator 90 is coupled to the rotary member 80 by engaging the roller 91 with the cam hole 85. The pressing portion 93 is coupled to an advancing and retreating rod (not shown) of the linear actuator 90. The roller 91 is rotatably supported by the roller clamping portion 92 at a center 91a of the roller 91. The linear actuator 90 is attached to a side surface of the blow base 73 or the blow cavity mold 70 in a direction (a direction orthogonal to the parting line PL) perpendicular to the protruding direction of the insert mold 84 in the pressing position of the rotary member 80.

The linear actuator 90 presses the cam hole 85 via the roller 91 by moving the pressing portion 93 forward and rotates the rotary member 80 to move rotary member 80 from the standby position to the pressing position. The linear actuator 90 retreats the cam hole 85 via the roller 91 by moving the pressing portion 93 backward and rotates the rotary member 80 to move the rotary member 80 from the pressing position to the standby position. The inner diameter of the cam hole 85 is larger than the outer diameter of the roller 91 so that the roller 91 can come rolling contact with the elongated cam hole 85 when the rotary member 80 moves between the standby position and the pressing position. The cam hole 85 in the pressing position is tangent to the roller 91. In the pressing position, a contact point between the cam hole 85 and the roller 91 is located on a straight line B that passes through the center of the roller 91 and extends in the forward direction of the roller 91. In the pressing position, the long axis (an axis on a straight line E in Figs. 3 and 4) of the cam hole 85 is substantially parallel to (substantially perpendicular to the parting line PL) the side surface of the split mold 71. In the standby position, the roller 91 abuts against an inner edge portion of the cam hole that is deviated to an outer side (the blow base 73) from the center of the cam hole. At this time, the long axis of the cam hole 85 is in an inclined state relative to the side surface of the split mold 71 (the angle between the long axis and the parting line PL is acute when viewed from the direction of the hollow portion 72). Further, in the standby position, the main body portion 82 (specifically, the flat plate portion 82b) of the rotary member 80 protrudes outward from the side surface of the split mold 71 (protrudes from the space region of the hollow portion 72).

In the present embodiment, a rotation angle θ of the rotary member 80 when moving from the standby position to the pressing position is substantially 15 degrees. The rotation angle θ of the rotary member 80 may be appropriately set within a range of 5 degrees to 90 degrees, preferably 10 degrees to 30 degrees. Herein the rotation angle θ is formed by a straight line C1 extending on the parting line and a straight line C2 passing the end portion 83 in the standby position when the blow cavity mold 70 is viewed in a cross-section (see Fig. 3). Further, the rotation angle θ is formed by a straight line D1 connecting the center 81a of the bearing portion 81 and the center 91a of the roller 91 in the standby position and a straight line D2 connecting the center 81a of the bearing portion 81 and the center 91a of the roller 91 in the pressing position when the blow cavity mold 70 is viewed in a cross-section (see Fig. 4).

In the blow molding unit 50, only the split mold 71 on one side of the blow cavity mold 70 is described and the split mold 71 on the other side has the same configuration.

Next, a blow molding method of the resin container 1 using the blow molding apparatus 30 will be described.

First, in the injection molding unit 40, the injection core mold and the injection cavity mold are clamped to the neck mold, and the resin material is injected from the injection device 42 into the mold to manufacture the cylindrical bottomed preform P.

Subsequently, the injection core mold is retracted, the injection cavity mold is opened, and the preform P is transported to the temperature adjustment unit 45 in a state in which the neck portion of the preform P is held by the neck mold.

In the temperature adjustment unit 45, the preform P is inserted into a temperature adjustment pot or the like so that the temperature of the preform P is adjusted to a temperature suitable for stretching.

Subsequently, the preform P is removed from the temperature adjustment pot and transported to the blow molding unit 50.

In the blow molding unit 50, the blow core mold is inserted into the preform P held by the neck mold, the blow cavity mold 70 is clamped, and the bottom mold is assembled, so that the preform P is placed in the cavity 70a.

Blow air is introduced into the preform P from the blow core mold and the preform P is blow molded into the shape of the cavity 70a. In this case, the pressing portion 93 of the linear actuator 90 provided in the split mold 71 is moved forward toward the cavity 70a in a state in which the preform P is inflated to a certain extent by the introduction of blow air. With the forward movement of the pressing portion 93, the roller 91 rolls in the cam hole 85 and the rotary member 80 is rotated to press the insert mold 84 toward the inside of the cavity 70a. Accordingly, the rotary member 80 moves from the standby position (see Fig. 3) to the pressing position (see Fig. 4). The same operation is also performed in the split mold 71 on the other side in the blow molding unit 50.

By moving two insert molds 84 toward each other from the blow cavity mold 70, the first recess 22 and the second recess 23 are formed in the body portion 12 of the blown preform P (the resin container 1). With the first recess 22 and the second recess 23 formed, the grip 20, in which an outer circumferential surface thereof on the front side is defined by the rear surface portion 22b of the first recess 22 and the rear surface portion 23b of the second recess 23, is formed.

Subsequently, the blow cavity mold 70, the blow core mold, and the bottom mold are opened, and the blow-molded resin container 1 is transported to the removing unit 55 while being held by the neck mold.

Finally, in the removing unit 55, the neck portion 11 of the resin container 1 is released from the neck mold, the resin container 1 in which the grip portion 20 is formed is removed from the blow molding device 30, and the manufacture of the resin container 1 is completed.

In the above process of molding the resin container 1, the step of manufacturing the preform P may be a step of preparing the preform P for blow molding, and may be a step of, for example, transporting the preform P manufactured at another place.

In a mold in the related art, in which an insert mold is directly coupled to a linear actuator or a link mechanism is interposed between the linear actuator and the insert mold and the linear actuator is provided in the advancing and retreating direction of the insert mold, the blow molding space is small since the linear actuator is provided in a blow mold or a blow base, and container sizes and the number of containers that can be molded are reduced. In a mold in which a plurality of link mechanisms are interposed and the linear actuator is provided in a direction perpendicular to the advancing and retreating direction of the insert mold, the number of components increases and there may be problems in terms of costs and difficulties in assembly and adjustment work and processing accuracy.

However, according to the blow cavity mold 70 according to the present embodiment, the insert mold 84 can be advanced and retreated in the depth direction of the grip portion 20 of the container 1 by single rotary member 80 that is rotated by the linear actuator 90. Accordingly, it is possible to provide a small-sized mold in which a swing range required for the insert mold is ensured with a small number of components, work such as processing, assembly and adjustment is easy, and containers of various sizes can be molded. In particular, the space for a drive mechanism and the stroke for the linear actuator 90 are saved since the rotary member 80 and the linear actuator 90 are coupled to each other via the cam hole 85 and the roller 91 (the pressing portion 93). Further, the assembly and adjustment work can be performed easily since the drive mechanism is also arranged on the side surface (an outer side) of the split mold 71.

According to the blow cavity mold 70 according to the present embodiment, the roller 91 is engaged (loose-fitted) with the elongated cam hole 85, the linear actuator 90 is coupled to the rotary member 80, and the roller 91 comes rolling contact with the cam hole 85 accompanying the operation of the linear actuator 90, so that a grip forming portion can be moved from the standby position to the pressing position. Further, with the elongated cam hole 85 formed, the linearly moving roller 91 can come rolling contact with the cam hole 85 and the rotary member 80 can be appropriately moved even if the direction of the cam hole 85 changes due to the movement of the rotary member 80.

According to the blow cavity mold 70 according to the present embodiment, the contact point between the cam hole 85 and the roller 91 in the pressing position is located on the straight line B that passes through the center 91a of the roller 91 and extends in the forward direction of the pressing portion 93 (see Fig. 4). That is, in the pressing position, an edge line of the cam hole 85 intersects a straight line passing through the center 91a and the contact point between the cam hole 85 and the roller 91 at a substantially right angle, and the roller 91 is substantially tangent to the cam hole 85. Therefore, by aggregating forces from the linear actuator 90 at substantially one point without dispersing, the forces can be efficiently transmitted in the forward direction of the pressing portion 93 and the insert mold 84 can be held in the pressing position appropriately against the blow pressure.

According to the blow cavity mold 70 according to the present embodiment, the linear actuator 90 is provided in a direction perpendicular to the protruding direction of the insert mold 84 in the pressing position so that the cavity 70a can be enlarged in the protruding direction of the insert mold 84. Therefore, it is possible to mold a large container even with a small mold and mold containers of various sizes.

According to the blow cavity mold 70 according to the present embodiment, the center of the cam hole 85 in the pressing position is located on the inner side (the position away from the linear actuator 90 in the direction in which the parting line in Fig. 4 extends) of the split mold 71 from the center of the bearing portion 81, so that the cam hole 85 would not largely protrude toward the outside of the split mold 71 even when the rotary member 80 is rotated from the pressing position to the standby position. Therefore, the linear actuator 90 can be arranged at a position close to the split mold 71 and the space for the drive mechanism and the stroke for the linear actuator 90 are saved.

In this manner, according to the blow cavity mold 70 according to the present embodiment, it is possible to provide a mold that has a small number of components, that is a small size, and that is capable of molding containers of various sizes.

The present invention is not limited to the above embodiment and may be modified or improved as appropriate. Materials, shapes, sizes, numerical values, forms, numbers, arrangement places, and the like of components in the above embodiment are arbitrary and not limited as long as the present invention can be achieved.

The present embodiment describes an example in which the transport unit is constituted by a rotary plate, but the present invention is not limited thereto. For example, the blow molding apparatus 30 may have a configuration in which the injection molding unit 40 and the blow molding unit 50 are connected using a transport rail. The transport rail may be configured such that a transport jig that supports the preform P can be continuously transported in a loop shape, and the temperature adjustment unit 45 (a heating unit) may be provided in the middle of the path (the configuration of the blow molding apparatus is known in WO 2012/057016 and JP-A-H8-132517 by the present applicant, which is briefly described in the present invention). In the blow molding unit 50, a plurality of blow cavity molds 70 may be arranged in a direction along a parting line within a range of the length of a mold clamping device.

### REFERENCE SIGNS LIST

- 1:: resin container
- 11:: neck portion
- 12:: body portion
- 20:: grip portion
- 22:: first recess
- 23:: second recess
- 30:: blow molding apparatus
- 40:: injection molding unit
- 50:: blow molding unit (example of blow device)
- 70:: blow cavity mold
- 70a:: cavity
- 80:: rotary member
- 81:: bearing portion (rotation fulcrum portion)
- 82:: main body portion
- 83:: end portion
- 84:: insert mold
- 84a:: pressing surface
- 85:: cam hole
- 90:: linear actuator
- 91:: roller
- 92:: roller clamping portion
- 93:: pressing portion

## Claims

1. A mold (70) for manufacturing a resin container (1) having a grip portion (20) by blow molding in which a cylindrical bottomed preform (P) is inserted into a cavity (70a), the mold (70) comprising:
a rotary member (80) rotatably attached to a mold main body about a bearing portion (81), the rotary member (80) including:
a protruding grip forming portion (84) configured to form the grip portion (20) in a portion of the container (1) by pressing a portion of the preform (P) that inflates during blow molding; and
a first engagement portion (85) formed between the bearing portion (81) and the grip forming portion (84); and
a linear actuator (90) including a pressing portion (93) having a second engagement portion (91) engaged with the first engagement portion (85), the linear actuator (90) being configured to press and rotate the rotary member (80) by moving the pressing portion (93) forward toward the cavity (70a) so as to move the grip forming portion (84) from a standby position to a pressing position;
**characterized in that**:
the first engagement portion (85) is an elongated cam hole;
the second engagement portion (91) is a loose fit member engaged with the cam hole; and
in the pressing position, a contact point between the cam hole (85) and the loose fit member (91) is located on a straight line that passes through a center of the loose fit member (91) and extends in the direction where the pressing portion (93) is moved forward toward the cavity (70a) so as to move the grip forming portion (84) from the standby position to the pressing position.

2. The mold (70) according to claim 1,
wherein the linear actuator (90) is provided in a direction perpendicular to a protruding direction of the grip forming portion (84) in the pressing position.

## Patentansprüche

1. Form (70) zur Herstellung eines Harzbehälters (1), der einen Griffabschnitt (20) aufweist, durch Blasformen, in der eine zylinderförmige Vorform (P) mit Boden in eine Vertiefung (70a) eingeführt wird, wobei die Form (70) Folgendes umfasst:
ein Rotationselement (80), das um einen Lagerabschnitt (81) drehbar an einem Formhauptkörper angebracht ist, wobei das Rotationselement (80) Folgendes umfasst:
einen vorstehenden Griffformungsabschnitt (84), der ausgelegt ist, um den Griffabschnitt (20) in einem Abschnitt des Behälters (1) auszubilden, indem ein Abschnitt der Vorform (P) gepresst wird, der sich während des Blasformens aufbläht; und
einen ersten Eingriffsabschnitt (85), der zwischen dem Lagerabschnitt (81) und dem Griffformungsabschnitt (84) ausgebildet ist; und
einen linearen Aktuator (90), der einen Pressabschnitt (93) umfasst, der einen zweiten Eingriffsabschnitt (91) aufweist, der sich mit dem ersten Eingriffsabschnitt (85) in Eingriff befindet, wobei der lineare Aktuator (90) ausgelegt ist, um das Rotationselement (80) durch Vorwärtsbewegen des Pressabschnitts (93) in Richtung der Vertiefung (70a) zu pressen und zu rotieren, um den Griffformungsabschnitt (84) aus einer Bereitschaftsposition in eine Pressposition zu bewegen;
**dadurch gekennzeichnet, dass**:
der erste Eingriffsabschnitt (85) ein längliches Nockenloch ist;
der zweite Eingriffsabschnitt (91) ein Spielpassungselement ist, das sich mit dem Nockenloch in Eingriff befindet; und
ein Kontaktpunkt zwischen dem Nockenloch (85) und dem Spielpassungselement (91) in der Pressposition auf einer geraden Linie angeordnet ist, die durch einen Mittelpunkt des Spielpassungselements (91) verläuft und sich in jene Richtung erstreckt, in die der Pressabschnitt (93) in Richtung der Vertiefung (70a) vorwärts bewegt wird, um den Griffformungsabschnitt (84) aus der Bereitschaftsposition in die Pressposition zu bewegen.

2. Form (70) nach Anspruch 1,
wobei der lineare Aktuator (90) in einer Richtung bereitgestellt ist, die im rechten Winkel auf eine Richtung steht, in die der Griffformungsabschnitt (84) in der Pressposition vorsteht.

## Revendications

1. Moule (70) destiné à fabriquer un contenant en résine (1) présentant une partie de poignée (20) par moulage par soufflage dans lequel une préforme à fond cylindrique (P) est insérée dans une cavité (70a), le moule (70) comprenant :
un élément rotatif (80) fixé de manière rotative à un corps principal de moule autour d'une partie de palier (81), l'élément rotatif (80) incluant :
une partie formant poignée en saillie (84) configurée pour former la partie de poignée (20) dans une partie du contenant (1) en pressant une partie de la préforme (P) qui se gonfle pendant un moulage par soufflage ; et
une première partie de mise en prise (85) formée entre la partie de palier (81) et la partie formant poignée (84) ; et
un actionneur linéaire (90) incluant une partie de pression (93) présentant une seconde partie de mise en prise (91) mise en prise avec la première partie de mise en prise (85), l'actionneur linéaire (90) étant configuré pour presser et faire tourner l'élément rotatif (80) en déplaçant la partie de pression (93) vers l'avant en direction de la cavité (70a) de manière à déplacer la partie formant poignée (84) d'une position d'attente à une position de pression ;
**caractérisé en ce que** :
la première partie de mise en prise (85) est un trou de came allongé ;
la seconde partie de mise en prise (91) est un élément à ajustement libre venant en prise avec le trou de came ; et
dans la position de pression, un point de contact entre le trou de came (85) et l'élément à ajustement libre (91) est situé sur une ligne droite qui passe à travers un centre de l'élément à ajustement libre (91) et s'étend dans la direction dans laquelle la partie de pression (93) est déplacée vers l'avant en direction de la cavité (70a) de manière à déplacer la partie formant poignée (84) de la position d'attente à la position de pression.

2. Moule (1) selon la revendication 1,
dans lequel l'actionneur linéaire (90) est fourni dans une direction perpendiculaire à une direction en saillie de la partie formant poignée (84) dans la position de pression.
